# EUROPEAN PATENT SPECIFICATION

(11) **EP 2 648 904 B1**
(45) Date of publication and mention of the grant of the patent: **01.04.2015**
(21) Application number: 11808961.4
(22) Date of filing: 09.12.2011
(51) Int. Cl.: B32B 27/00, B32B 3/20

(54) **STRUCTURAL MATERIAL AND METHOD OF MANUFACTURING THEREOF**
STRUKTURMATERIAL UND HERSTELLUNGSVERFAHREN DAFÜR
MATÉRIAU STRUCTUREL ET PROCÉDÉ DE FABRICATION ASSOCIÉ

(30) Priority: 09.12.2010 NL 2005845
(43) Date of publication of application: 16.10.2013
(73) Proprietor: Luinstra Beheer B.V., 7711 GG Nieuwleusen (NL)
(72) Inventor: LUINSTRA, Marten, 7955 AB Ijhorst (NL); VERSCHUT, Peter, NL-7603 NS Almelo (NL)
(74) Representative: Bartelds, Erik
(86) International application number: PCT/NL2011/050842
(87) International publication number: WO 2012/078045

(56) References cited:
- EP-A2- 0 184 728

## Description

The invention relates to a structural material and a method of manufacturing thereof. More specifically, the invention relates to a composite structural material suitable for heavy duty applications such as truck mounted dumpers or tippers and the method for manufacturing such composite structural material.

In particular, the invention relates to a structural material as defined in the preamble of claim 1. Such a structural material is known from EPO 0 184 728 A2.

This prior art document discloses a structural material in the form of a monolithic plate. In a first embodiment, the plate is constituted by a reinforced core comprising a three dimensional grid and covered by or embedded in a synthetic material. In a second embodiment the monolithic plate is a hollow plate, which comprises a series of parallel hollow spaces formed by covering tubes with synthetic material, inflating the tubes and curing the synthetic material. The hollow spaces are covered on both sides by a layer of synthetic material and a three dimensional reinforcing grid is formed around the spaces and between the cover layers.

EP 0 184 728 A2 does not disclose any particular use for the monolithic plate, nor any details about the way the reinforcing three dimensional grid is formed.

In the art, these kind of composite materials are proposed for e.g. vehicle bodies, such as for example in the international application WO94/26576. In this application, thermoplastic sandwich material is used, wherein a layer of foamed recycled material is sandwiched between two layers of virgin thermoplastic material. In this application the layers are built up by means of e.g. rotational moulding of linear low density polyethylene.

These materials are however relative weak, and have a low glass transition and low melting temperature. For these reasons, the application of these materials is unpractical, and even dangerous with respect to flammability. Furthermore the specific local strength and direction of the fibres is very difficult to monitor and adapt.

In the European patent application EP 1 340 669 A2 a dumper or tipper is described, comprising a resin transfer moulded fibre reinforced body, being reinforced with foam shaped trusses.

This structure however is not suitable for high temperature applications and has a poor impact resistance. Furthermore the proposed method of manufacturing is difficult to transform in automatic or robotic manufacturing. Thus this method is less suitable for mass production and therefore commercially less viable.

Accordingly it is an object of the invention to mitigate or solve the above described and/or other problems of structural materials in the art, while maintaining and/or improving the advantages thereof.

More specifically the object of the invention can be seen in providing a strong structural material, which can withstand high loads, high stresses, high temperature differences, high impacts and which has a high chemical resistance while being considerably less heavy than usual structural materials such as steel without losing structural integrity.

These and/or other objects are reached by a structural material suitable for constructing load bearing structures such as truck mountable dumper or tipper bodies, tanks, ship hulls, containers and the like, as defined in claim 1. Thus a durable and strong material is obtained, which can be used for producing e.g. tipper bodies for tipper or dumper trucks.

Since the structural material of the invention is lighter than steel, a tipper body produced from this material can carry a higher payload. Since the space frame structure of the structural material between the first and second layer comprises open spaces, a light weight, strong and stiff construction can be obtained. The open spaces in the space frame are filled with a foam material, so that the material is isolated and has an increased structural integrity.

The foam can be inserted as a solid foam in the open spaces during the build-up of the material or it can be injected after completion of the first and second layers.

In the structural material, the fibre reinforced first layer, the fibre reinforced second layer and/or the components of the space frame can be manufactured by being wound or arranged by means of local tape or fibre placement on a preform or mould as a fibre comprising elongated thermoplastic or thermoset material such as tape, unidirectional tape, thread, comingled fibre, cable, woven or non woven ribbon.

Thus large parts of the manufacturing can be performed automatically, reducing the labour costs and efforts involved.

In the structural material, the fibre comprising elongated thermoplastic or thermoset material can be welded, fused, bound or molten during or after winding on the preform or mould.

Preferably, the fibre reinforced thermoplastic or thermoset material of the first layer, the second layer and/or the space frame is resistant to temperatures up to 150°C, preferably up to 175°C and more preferably to 200°C. In this way the tipper body may be used for transporting relatively high temperature materials, like e.g. hot asphalt.By applying this technique, a direction of the fibres and thus directionally composed strength can be arranged. As described hereinabove, the structural material can be integrated in a tipper body or dumper body mountable on e.g. a truck.

The invention further related to a method of manufacturing a structural material according to claim 1, wherein the method comprises the following steps, to be performed in any suitable order; a) providing a first preform or mould; b) winding or arranging by means of local tape or fibre placement a first elongated thermoplastic or thermoset material comprising fibre material on the first preform or mould; c) fusing, bonding, welding or melting the first elongated thermoplastic or thermoset material during or after step b) to produce a first layer; d) providing a space frame structure by welding or bonding together fibre reinforced beams and trusses; e) arranging the space frame on, in or around the first layer and welding or bonding the space frame to the first layer; f) arranging a second layer on, in or around the space frame, such that the space frame is arranged between the first and the second layer and spaces are defined in the space frame; and g) filling the open spaces in the space frame with a foam material.

By this method an automated build up of most of the components can be performed, while strong and directionally arranged strength of each individual component can be designed and made. In this method, step f) can comprise the following steps, to be executed in any suitable order: h) providing a second preform or mould; i) winding or arranging by means of local tape or fibre placement a second elongated thermoplastic or thermoset material comprising fibre material on the second preform or mould; j) fusing, bonding, welding or melting the second elongated thermoplastic material during or after step i) to produce the second layer; k) removing the second layer from the second preform or mould and arranging it in, on or around the space frame.

The first and/or the second preform or mould can provide at least two sites for producing at least two of the first and/or the second layers in one winding or tape or fibre laying step b) and/or i), after which in a subsequent cutting step, the at least two first and/or second layers can be cut from each other and from eventual residual material. By combining the moulds for the first and second layers an efficient winding or tape laying process is achieved.

Thus a relative flexible production of the different individual layers can be performed. Multiple layers can be formed in one step, for instance two first and two second layers, allowing the parts for two separate products to be made in one process cycle. Also different parts of one product may be made, e.g. a set of first and second layers for forming a tipper body and another set of layers for forming a hatch.

The above described method can further comprise filling the open spaces of the space frame with the foam material by inserting solid foam parts in the open spaces before arranging and affixing the second layer to the space frame or by injecting a curable.foam material into the open spaces after arranging and affixing the second layer to the space frame. The foam provides additional strength and rigidity, and further provides isolation. This latter

feature is advantageous when the structural material is used in a container or tipper body that is filled with contents having temperature that is higher or lower than ambient temperature.

Additional layers can be affixed to the first and/or the second layer, chosen from isolating or structural non-reinforced or reinforced materials such as aerogel, PEEK, Teflon, nylon, polyamide, polyimide, and/or other suitable materials, wherein the additional layers can be coated or formed on the first and/or second layer or can be formed on a third mould or preform in advance, and hereafter affixed to the first or the second layer by bonding, welding or melting such that a multilayer is obtained.

The space frame in step d) can be constructed from beams and trusses, wherein at least a portion of the beams and trusses are wound from a third elongated thermoset or thermoplastic fibre comprising material, wherein the third elongated material is fused, welded, bonded or melted together during or after winding and wherein the beams and trusses are welded or bonded together into said space frame.

The fibre reinforced thermoplastic or thermoset material of the first layer, the second layer and/or the space frame is resistant to temperatures up to 150°C, preferably up to 175°C and more preferably to 200°C, so as to provide a high temperature resistant product.

The first layer and/or the second layer can be formed as an open box having a bottom segment and a plurality of walls extending from said bottom segment.

The method of manufacturing can be performed as a fully automated production. By this way, an economically viable manufacturing can be established.

The invention also relates to a tipper body comprising a bottom section, two side walls and at least one end wall. In accordance with the invention, each part of th tipper body is made from a structural material as described above.

In order to further elucidate the invention, exemplary embodiments will be described with reference to the drawing. In the drawing:
Figure 1 depicts a schematic perspective view of a first embodiment of the structural material according to the invention;
Figure 2 depicts a schematic perspective view of a mould or preform according to an embodiment of the invention;
Figure 3 depicts a schematic cross sectional view of the structural material;
Figure 4 depicts a schematic cross sectional view of the structural material according to an alternative embodiment.

The figures represent specific exemplary embodiments of the inventions and should not be considered limiting the invention in any way or form. Throughout the description and the figures the same or corresponding reference numerals are used for the same or corresponding elements.

The expression "fibre" used herein is to be understood as, though not to be considered limited to any material with an enhanced tensile strength, which can be embedded in a thermoplastic or thermoset material. Examples of such materials are carbon fibres, glass fibres, other mineral fibres, metal fibres, yarns, or threads of any combination of these fibres.

The expression "tipper or dumper body" used herein is to be understood as, though not to be considered limited to a open box like structure, that can be mounted on a truck, and can be tipped over, in order to empty.

The expression "space frame structure" used herein is to be understood as, though not to be considered limited to an open structural mostly three dimensional frame.

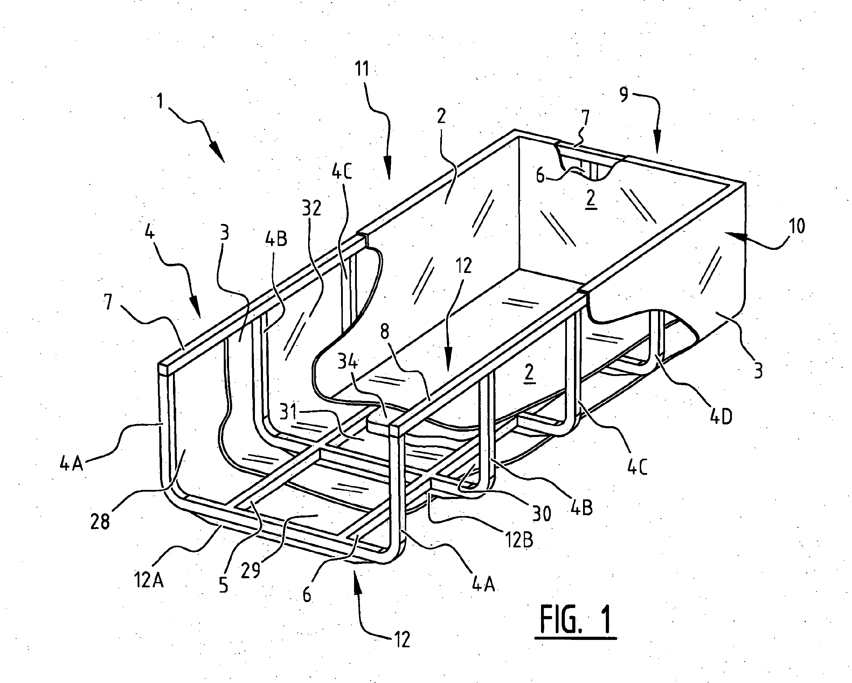

In figure 1, a schematic perspective view is depicted of a structural material 1 for a dumper or tipper body. The dumper or tipper body includes a bottom section 12, first and second side walls 10, 11 and a front end wall 9. The tipper body has an open top and an open rear end opposite the front end wall 9. This open rear end may be closed off by a hatch (not shown) that can be hingedly arranged between the side walls 10, 11. This hatch can be made from a similar structural material

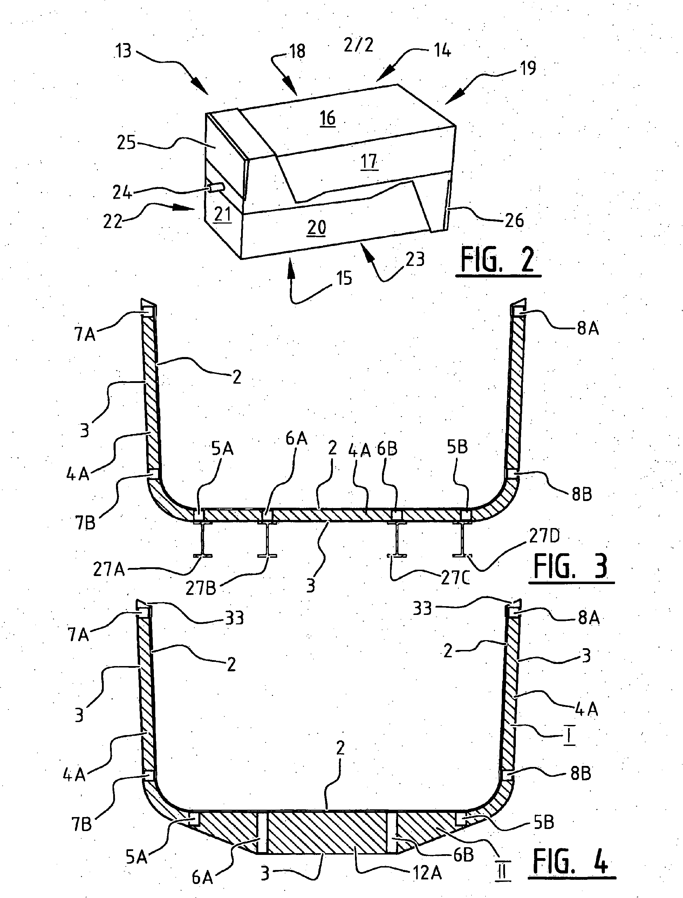

The structural material 1 comprises an inner first layer 2, a space frame 4 and an outer second layer 3. The space frame is arranged or sandwiched between the first and second layer. The space frame 4 is built up from beams 5, 6 7 and 8 and trusses 4A, 4B, 4C and 4D. The trusses 4A-4D are U-shaped hollow or foam filled fibre reinforced tubes. The trusses 4A-4D can run from the first side wall 11 via the bottom section 12 to the second side wall 10. At the bottom section 12, the trusses 4A-4D may be provided with a broadened section 12A-12D respectively, for further reinforcement, as can be seen in detail in figure 4. The trusses 4A-4C can be made by providing a foam material having a similar shape, around which a fibre comprising elongated thermoplastic or thermoset material is wound.

The fibre comprising elongated material can for instance be a tape, a unidirectional tape, a thread, comingled fibre material, a cable, or a woven or a non woven ribbon. This material can be affixed to itself during or after winding. During winding, the attachment can be done for instance by local heating by means of e.g. a laser, or other light, heat or infrared source. Thus the fibre material can be wound in certain directions, such that optimal strength distribution within the trusses can arranged.

The fibre comprising elongated material can be a thermoset material such as an epoxy resin, a phenol resin or a vinylether resin.

The fibre comprising elongated material can also be a thermoplastic material such as an engineering plastic, chosen from one or more of PETP, PET, PA, PBTP, PEEK, POM, PPS, ABS, PES, PEKK and or other suitable polymers.

The thermoset or thermoplastic material is preferably a material having a glass transition temperature Tg of more than 300°C. In that way the structural material can be highly temperature resistant up to temperatures in the order of 150-200°C, so that the resulting product can be used in a high temperature environment. For instance, the tipper body made of this material may be used for transporting hot asphalt to a road construction side.

The applied fibres can be glass fibres, quarts glass fibres, carbon fibres, any other mineral fibre, or other suitable fibres.

The inner first layer and the outer second layer can be wound in a similar way and form similar materials, although the form or mould around which these are wound is different. In figure 2, such a mould or preform is depicted.

The mould or preform 13 is a boxlike structure, provided with an axis 24, around which the mould 13 can be rotated. Two spaces 14 and 15 are provided where a first 2 and/or a second layer 3 can be produced. The space 14 comprises a bottom section 16, two side wall sections 17 and 18 and a front wall section 19. Similarly, the space 15 provides a front wall section 21, two side wall sections 22 and 23 and a bottom wall section 23. In this way the spaces 14, 15 are similarly shaped, but have different dimensions to form a second or outer layer 3 that will fit around the first or inner layer 2 and the space frame 4.

In order to manufacture the first 2 and/or the second layer 3, the mould 13 is rotated around the axis 24 and a ribbon of fibre reinforced material is wound around the mould 13. A winding device or tape or fibre placement device that is used to place and/or wind the elongated material can comprise a reel with winding material such as e.g. ribbon or tape, a feeding guide and a heating gun. The device or at least its feeding guide can be moveable parallel to the axis 24 between the front wall sections 19, 21 of the mould 13. The heating gun can be a hot air gun, a laser, or an infra red source. The tape or the ribbon can be directly welded or fused on the mould or on a previous layer by heating the tape before it touches the mould or the previous layer, during it is touching the mould or the previous layer or directly after it has touched the mould or the previous layer.

Alternatively, the elongated material can be added on the mould or the underlying layers by tape or fibre placement. Thus the elongated material is cut, such that the amount of excess material is reduced to a minimum and the cutting loose of the separate structural parts is no longer necessary.

Alternatively, the ribbon or tape can also be cured afterwards, for example by inserting the complete mould with the wound material in an oven.

In figure 2, the mould 13 is provided with two spaces for two firsts and or second layers. The mould in this figure is further provided with two spaces 25 and 26 for the backside hatch of the tipper or dumper body. Alternatively the mould can comprise four places for four first 2 and/or second layers 3, to be wound and produced in one step. Such a mould is considerably longer than the mould which is schematically depicted in figure 2.

After the first 2 and/or second layer 3 are manufactured, they are cut loose from each other and eventual excess material is cut off. Each layer 2, 3 will have a shape corresponding to that of the relevant mold space 14, 15, including a bottom, two side walls and a front wall. The layers 2, 3 are positioned at, on or in the space frame 4 and affixed thereto by welding, bonding, fusing, gluing or the like, thus forming an open topped box-like structure.

In similar fashion the layers formed in the spaces 25, 26 are cut loose and affixed to a corresponding space frame to form a hatch that may be mounted in the open rearside of the box-like structure.

The space frame 4 as is depicted in figure 1 comprises empty spaces 28, 29, 30, 31 and 32. These empty spaces can be filled with foam 34, either before the first 2 and second layer 3 are attached to the space frame'4 as solid block like pieces, fitting in the empty spaces 28-32 or afterwards as a foam curing fluid.

The beams 5, 6, 7 and 8 are, similar to the trusses 4A-4C manufactured from a fibre reinforced material. The beams 5-8 can be shifted through predefined holes in the trusses 4A-4D, as can be seen in more detail in figure 3. In this figure in truss 4A, the beams 6A, 6B, 7A, 7B, 8A and 8B are inserted. Alternatively the trusses 4A-4D can be interrupted and attached to the beams 6A-8B, e.g. by knee joints and/or corner linings. In a further alternative, the trusses 4A-4D and the beams 6A-8B can cross, wherein at the intersections recesses can be provided for a smooth crossing.

The beams 6A-8B can be made as hollow tubes, core filled tubes, or open T-, L-, I-, U-shaped profiles or other suitable profiles. In a similar way, the trusses 4A-4D can have any of these profile shapes.

In figure 3, the outer layer 3 is draped around the beams 6A-8B and the trusses 4A-4D. Below the outer layer 3, additional reinforcing profiles 27A, 27B, 27C and 27D can be provided. In the alternative embodiment as shown in figure 4, the reinforcing profiles 27A-27D are left out, and the lower beams 5A, 5B, 6A and 6B are having a enlarged height. The trusses 4A-4D are provided with an stronger bottom section 12A-12D respectively, In the 12A-12D again holes are provided for inserting the beams 5A-8B. The outer layer 3 is affixed to the outer side of the outer side of the bottom sections 12A-12D, and as such a more rigid construction can be provided.

In between the beams 6A and 6B, a frame can be mounted to which the tipper arm or tipper cylinder can be mounted. Since this frame can be integrated with the tipper body, a strong and durable attachment point can be provided. The attachment of the hinges of the tipper body can similarly be integrated with the tipper body, e.g. with the space frame.

In figures 3 and 4, at the upper edge of the tipper body, beams 7A and 8A are provided, these beams can be L-shaped, running horizontally from the mid front end portion 9, along the side portions 10 or 11 towards the open rear end of the tipper body. Similarly the beams 5 and 6 can be L-shaped, running down from the upper edge of the front end section 9, via the bottom section 12 towards the rear edge of the tipper body.

On top of the outer edge of the front end portion 9 and on top of the side wall portions 10 and 11 a protective collar 33 can be arranged. This collar can close and seal of the outer edges, where the first 2 and second layer 3 meet, such that e.g. water is prevented from reaching the inner structure of the structural material 1.

In figures 3 and 4, the inner layer 3 is built up out of two or more layers. The innermost of these layers can be a chemical barrier, a heat resistant material or a shock and/or impact absorbing material such as e.g. nylon, Teflon, PEEK or any other relative inert material. Another material as inner layer can comprise PUR for its shock and/or impact absorbing properties. The lining can also be chosen to have a low surface friction, such that the load of the tipper body can be unloaded more rapidly and/or smoothly. The applied materials as additional layers can be non-reinforced or reinforced.

The additional layer can further be a protective or isolating layer, such as aerogel or similar material. Any additional layer can on its turn be manufactured as depicted in figure 2 and described hereinabove and can after its completion be placed and bonded or glued in on or around the underlying layer 2, 3 or any other layer. These additional layers can, during the service life of the material be replaced, while the structure remains intact.

The invention is to be understood not to be limited to the exemplary embodiments shown in the figures and described in the specification. For instance the structural material can be used as concrete mould material, in construction of houses, industrial buildings and or other civil structures.

In some applications a second space frame might be used, for further strengthening.

These and other modifications are considered to be variations that are part of the framework, the spirit and the scope of the invention outlined in the claims.

### List of reference signs

- 1.: Structural material
- 2.: First layer
- 3.: Second layer
- 4.: Space frame
- 5.: Beam
- 6.: Beam
- 7.: Beam
- 8.: Beam
- 9.: Front end portion
- 10.: Side end portion
- 11.: Side end portion
- 12.: Bottom portion
- 13.: Mould
- 14.: First mould place
- 15.: Second mould place
- 16.: Bottom mould portion
- 17.: Side mould portion
- 18.: Side mould portion
- 19.: Front end mould portion
- 20.: Side mould portion
- 21.: Front end mould portion
- 22.: Side end mould portion
- 23.: bottom mould portion
- 24.: Axis
- 25.: Tail hatch mould portion
- 26.: Tail hatch mould portion
- 27A-D.: Reinforcement profiles
- 28.: Open space
- 29.: Open space
- 30.: Open space
- 31.: Open space
- 32.: Open space
- 33.: Protective collar
- 34.: Foam

## Claims

1. A structural material (1) suitable for constructing load bearing structures such as truck mountable dumper or tipper bodies, tanks, ship hulls, containers and the like, comprising
- a first layer (2) of fibre reinforced thermoplastic or thermoset material;
- a space frame structure (4) of fibre reinforced thermoplastic or thermoset material;
- a second layer (3) of fibre reinforced thermoplastic or thermoset material;
wherein the space frame structure (4) is arranged in between and affixed to the first and the second layer (2,3) and
wherein the space frame structure (4) between the first and second layer (2,3)comprises open spaces (28-32),
**characterized in that**
the open spaces (28-32) in the space frame (4) are filled with a foam material (34).

2. The structural material (1) according to claim 1 wherein the foam (34) is inserted as a solid foam in the open spaces during the build-up of the material (1) or injected after completion of the first and second layers (2, 3).

3. The structural material according to claim 1 or 2, wherein the fibre reinforced first layer (2), the fibre reinforced second layer (3) and/or the components of the space frame (4) are wound or arranged by means of local tape or fibre placement on a preform or mould (13) as a fibre comprising elongated thermoplastic or thermoset material such as tape, unidirectional tape, thread, comingled fibre, cable, woven or non woven ribbon.

4. The structural material (1) according to claim 3 wherein the fibre comprising elongated thermoplastic or thermoset material is welded, fused, bound or molten during or after winding on the perform or mould (13).

5. The structural material (1) according to any of the preceding claims, wherein the fibre reinforced thermoplastic or thermoset material of the first layer (2), the second layer (3) and/or the space frame (4) is resistant to temperatures up to 150°C, preferably up to 175°C and more preferably up to 200°C.

6. The structural material (1) according to any of the preceding claims, wherein the structural material (1) is integrated in a tipper body or dumper body mountable on e.g. a truck.

7. A method of manufacturing a structural material (1) according to claim 1, wherein the method comprises the following steps, to be performed in any suitable order;
a) providing a first preform or mould (13);
b) winding or arranging by means of tape or fibre placement a first elongated thermoplastic or thermoset material comprising fibre material around the first preform or mould (13);
c) fusing, bonding, welding or melting the first elongated thermoplastic or thermoset material during or after step b) to produce a first layer (2);
d) providing a space frame structure (4) by welding or bonding together fibre reinforced beams (5-8) and trusses (4A-D);
e) arranging the space frame (4) on, in or around the first layer (2) and welding or bonding the space frame (4) to the first layer (2);
f) arranging a second layer (3) on, in or around the space frame (4), such that the space frame (4) is arranged between the first and the second layer (2,3) and open spaces (28-32) are defined in the space frame (4); and
g)filling the open spaces (28-32) in the space frame (4) with a foam material (34).

8. The method according to claim 7, wherein the open spaces (28-32) of the space frame (4) are filled with the foam material (34) by inserting solid foam parts in the open spaces (28-32) before arranging and affixing the second layer (3) to the space frame (4) or by injecting a curable foam material into the open spaces (28-32) after arranging and affixing the second layer (3) to the space frame (4).

9. The method according to claim 7 or 8, wherein step f) comprises the following steps, to be executed in any suitable order:
h) providing a second preform or mould (13);
i) winding or arranging by means of tape or fibre placement a second elongated thermoplastic or thermoset material comprising fibre material around the second preform or mould (13);
j) fusing, bonding, welding or melting the second elongated thermoplastic material during or after step i) to produce the second layer (3);
k) removing the second layer (3) from the second preform or mould.(13) and arranging it in, on or around the space frame (4).

10. The method according to claim 9, wherein the first and/or the second preform or mould (13) provide at least two sites for producing at least two of the first and/or the second layers (2,3) in one winding or tape or fibre laying step b) and/or i), after which in a subsequent cutting step, the at least two first and/or second layers (2,3) can be cut from each other and from eventual residual material.

11. The method according to any of the claims 7-10, wherein additional layers can be affixed to the first and/or the second layer (2,3), chosen from isolating and structural materials such as aerogel or other isolating and/or nonwoven material, PEEK, Teflon, polyamide, polyimide, PETP, FBTP, POM, PU or PU-like materials;
wherein the additional layers can be coated or formed on the first and/or second layer (2,3) or can be formed on a third mould or preform in advance, and hereafter affixed to the first or the second layer (2,3) by bonding, welding or melting such that a multilayer is formed.

12. The method according to any of claims 7-11, wherein the space frame (4) in step d) is constructed from beams (5-8) and trusses (4A-D), wherein at least a portion of the beams (5-8) and trusses (4A-D) are wound from a third elongated thermoset or thermoplastic fibre comprising material, wherein the third elongated material is fused, welded, bonded or melted together during or after winding and wherein the beams (5-8) and trusses (4A-D) are welded or bonded together into said space frame.

13. The method according to any of claims 7-12, wherein the fibre reinforced thermoplastic or thermoset material of the first layer (2), the second layer (3) and/or the space frame (4) is resistant to temperatures up to 150°C, preferably up to 175°C and more preferably up to 200°C.

14. The method according to any of claims 7-13, wherein the first layer (2) and/or the second layer (3) is formed as an open box having a bottom segment and a plurality of walls extending from said bottom segment.

15. The method according to any of claims 7-14, wherein substantially all steps are performed in an automated process.

16. Tipper body, comprising a bottom section (12), two side walls (10,11) and at least one end wall (9), each of which are made from a structural material (1) according to any of claims 1-6 or from a structural material (1) manufactured by the method of any of claims 7-15, the tipper body preferably further comprising a frame for attachment of a tipper arm or tipper cylinder which frame is integrally formed with the tipper body.

## Patentansprüche

1. Strukturmaterial (1) geeignet für den Bau von Traglaststrukturen, wie zum Beispiel an einem LKW montierbare Kipper oder Kipperaufbauten, Behälter, Schiffsrümpfe, Container und dergleichen umfassend
- eine erste Schicht (2) aus einem faserverstärkten thermoplastischen oder duroplastischen Material;
- eine Raum-Gestellstruktur (4) aus einem faserverstärkten thermoplastischen oder duroplastischen Material;
- eine zweite Schicht (3) aus einem faserverstärkten thermoplastischen oder duroplastischen Material;
- wobei die Raum-Gestellstruktur (4) zwischen der ersten und der zweiten Schicht (2, 3) angeordnet ist und daran befestigt ist, und
wobei die Raum-Gestellstruktur (4) zwischen der ersten und der zweiten Schicht (2, 3) offene Räume (28 bis 32) umfasst,
**dadurch gekennzeichnet, dass**
die offenen Räume (28 bis 32) in dem Raumgestell (4) mit einem Schaummaterial (34) gefüllt sind.

2. Strukturmaterial (1) gemäß Anspruch 1, bei dem der Schaum (34) als ein fester Schaum in die offenen Räume während des Aufbauens des Materials (1) eingeführt wird oder nach Fertigstellung der ersten und zweiten Schichten (2, 3) eingespritzt wird.

3. Strukturmaterial gemäß Anspruch 1 oder 2, bei dem die faserverstärkte erste Schicht (2), die faserverstärkte zweite Schicht (3) und/oder die Bestandteile des Raumgestells (4) mittels einer lokalen Band- oder Faser-Platzierung auf einer Vorform oder einer Form (13) gewickelt oder angeordnet werden als ein faserumfassendes längliches thermoplastisches oder duroplastisches Material wie zum Beispiel ein Band, ein unidirektionales Band, als ein Strang, als eine zusammengemischte Faser, ein Kabel, ein gewebtes oder ein nicht gewebtes Band.

4. Strukturmaterial (1) gemäß Anspruch 3, bei dem die Faser, die ein längliches thermoplastischen oder duroplastischen Material umfasst, während oder nach einem Wickeln auf der Vorform oder der Form (13) geschweißt, fusioniert, gebunden oder geschmolzen ist.

5. Strukturmaterial (1) gemäß einem der vorstehenden Ansprüche, bei dem das faserverstärkte thermoplastische oder duroplastische Material der ersten Schicht (2), der zweiten Schicht (3) und/oder des Raumgestells (4) gegenüber Temperaturen bis zu 150°C, vorzugsweise bis zu 175°C und besonders bevorzugt bis zu 200°C widerstandsfähig ist.

6. Strukturmaterial (1) gemäß einem der vorstehenden Ansprüche, bei dem das Strukturmaterial (1) in einem Kipperaufbau oder einem Schütteraufbau integriert ist, der an beispielsweise einem LKW befestigbar ist.

7. Verfahren zum Herstellen eines Strukturmaterials (1) gemäß Anspruch 1, bei dem das Verfahren die folgenden Schritte umfasst, die in jeder geeigneten Reihenfolge durchgeführt werden können;
(a) Bereitstellen einer ersten Vorform oder einer Form (13);
(b) Wickeln oder Anordnen mittels einer Band- oder Faser-Platzierung eines ersten länglichen thermoplastischen oder duroplastischen Materials, das Fasermaterial umfasst, um die erste Vorform oder Form (13);
(c) Fusionieren, Binden, Schweißen oder Schmelzen des ersten länglichen thermoplastischen oder duroplastischen Materials während oder nach Schritt (b) um eine erste Schicht (2) herzustellen;
(d) Bereitstellen einer Raum-Gestellstruktur (4) über ein Verschweißen oder Zusammenbinden von faserverstärkten Tragbalken (5 bis 8) und Trägern (4A bis D);
(e) Anordnen des Raumgestells (4) an, in oder um die erste Schicht (2) und Schweißen oder Binden des Raumgestells (4) an die erste Schicht (2);
(f) Anordnen einer zweiten Schicht (3) an, in oder um das Raumgestell (4), so dass das Raumgestell (4) zwischen der ersten und der zweiten Schicht (2, 3) angeordnet ist und offene Räume (28 bis 32) in dem Raumgestell (4) definiert sind; und
(g) Füllen der offenen Räume (28 bis 32) in dem Raumgestell (4) mit einem Schaummaterial (34).

8. Verfahren gemäß Anspruch 7, bei dem die offenen Räume (28 bis 32) des Raumgestells (4) mit dem Schaummaterial (34) über ein Einführen von festen Schaumteilen in den offenen Räumen (28 bis 32) vor einem Anordnen und Befestigen der zweiten Schicht (3) an dem Raumgestell (4) gefüllt werden oder über ein Einspritzen eines aushärtbaren Schaummaterials in die offenen Räume (28 bis 32) nach einem Anordnen und Befestigen der zweiten Schicht (3) an dem Raumgestell (4).

9. Verfahren gemäß Anspruch 7 oder 8, bei dem Schritt (f) die folgenden Schritte umfasst, die in jeder geeigneten Reihenfolge ausgeführt werden können:
(h) Bereitstellen einer zweiten Vorform oder Form (13);
(i) Wickeln oder Anordnen mittels einer Band- oder Faser- Platzierung eines zweiten länglichen thermoplastischen oder duroplastischen Materials, das Fasermaterial umfasst, um die zweite Vorform oder Form (13);
(j) Fusionieren, Binden, Schweißen oder Schmelzen des zweiten länglichen thermoplastischen Materials während oder nach Schritt i), um die zweite Schicht (3) herzustellen;
(k) Entfernen der zweiten Schicht (3) von der zweiten Vorform oder Form (13) und Anordnen in, an oder um das Raumgestell (4).

10. Verfahren gemäß Anspruch 9, bei dem die erste und/oder die zweite Vorform oder Form (13) wenigstens zwei Seiten zum Herstellen von wenigstens zwei der ersten und/oder zweiten Schichten (2, 3) in einem Wickel- oder Band- oder Faser-Ablegeschritt b) und/oder i) bereitstellen, nach dem in einem nachfolgenden Schneideschritt die wenigstens zwei ersten und/oder zweiten Schichten (2, 3) voneinander abgeschnitten werden können und von eventuell überschüssigen Restmaterial.

11. Verfahren gemäß einem der Ansprüche 7 bis 10, bei dem zusätzliche Schichten an den ersten und/oder zweiten Schichten (2, 3) befestigt werden können, die gewählt werden von isolierenden und Strukturmaterialien wie zum Beispiel Aerogel oder andere isolierende und/oder Faservlies- Materialien, PEEK, Teflon, Polyamid, Polyimide, PETP, FBTP, POM, PU oder PUartige Materialien;
wobei die zusätzlichen Schichten an der ersten und/oder zweiten Schicht (2, 3) beschichtet oder gebildet sein können, oder an einer dritten Form oder Vorform vorab gebildet sein lönnen, und hiernach an die erste oder die zweite Schicht (2, 3) über ein Binden, Schweißen oder Schmelzen befestigt sein können, so dass eine Mehrfachschicht ausgebildet wird.

12. Verfahren gemäß einem der Ansprüche 7 bis 11, bei dem das Raumgestell (4) in Schritt d) aus Tragbalken (5 bis 8) und Trägern (4A bis D) zusammengesetzt wird, wobei wenigstens ein Bereich der Tragbalken (5 bis 8) und Träger (4A bis D) aus einem dritten länglichen duroplastischen oder thermoplastischen Faser umfassenden Material gewickelt wird, wobei das dritte längliche Material während oder nach einem Wickeln fusdioniert, verschweißt, gebunden oder zusammengeschmolzen wird und wobei die Tragbalken (5 bis 8) und Träger (4A bis D) in dem Raumgestell verschweißt oder zusammengebunden werden.

13. Verfahren gemäß einem der Ansprüche 7 bis 12, bei dem das faserverstärkte thermoplastische oder duroplastische Material der ersten Schicht (2), der zweiten Schicht (3) und/oder des Raumgestells (4) gegenüber Temperaturen von bis zu 150°C, vorzugsweise bis zu 175°C und besonders bevorzugt bis zu 200°C widerstandsfähig ausgebildet ist.

14. Verfahren gemäß einem der Ansprüche 7 bis 13, bei dem die erste Schicht (2) und/oder die zweite Schicht (3) als ein offenes Gehäuse mit einem Bodenabschnitt und mehreren von Wänden ausgebildet ist, die sich von dem Bodenabschnitt erstrecken.

15. Verfahren gemäß einem der Ansprüche 7 bis 14, bei dem im Wesentlichen alle Schritte in einem automatisierten Prozess durchgeführt werden.

16. Kipperaufbau umfassend einen Bodenabschnitt (12), zwei Seitenwände (10, 11) und wenigstens eine Endwand (9), von denen jede aus einem Strukturmaterial (1) gemäß einem der Ansprüche 1 bis 6 oder aus einem Strukturmaterial (1), das über das Verfahren gemäß einem der Ansprüche 7 bis 15 hergestellt wurde, hergestellt ist, wobei der Kipperaufbau vorzugsweise weiter ein Gestell zur Befestigung eines Kipperarms oder eines Kipperzylinders umfasst, wobei das Gestell integral mit dem Kipperaufbau ausgebildet ist.

## Revendications

1. Matériau structural (1) approprié à la construction de structures porteuses telles que des corps de tombereaux ou de bennes qui peuvent être montés sur un camion, des réservoirs, des coques de bateau, des conteneurs et similaires, comprenant :
- une première couche (2) de matériau thermoplastique ou thermodurci renforcé par des fibres ;
- une structure spatiale (4) en matériau thermoplastique ou thermodurci renforcé par des fibres ;
- une seconde couche (3) de matériau thermoplastique ou thermodurci renforcé par des fibres ;
dans lequel la structure spatiale (4) est agencée dans l'intervalle et fixée à la première et à la seconde couche (2, 3) ; et
dans lequel la structure spatiale (4) qui se situe entre la première et la seconde couche (2, 3), comprend des espaces ouverts (28-32) ;
**caractérisé en ce que** :
les espaces ouverts (28-32) qui se situent dans la structure spatiale (4) sont remplis avec un matériau de mousse (34).

2. Matériau structural (1) selon la revendication 1, dans lequel la mousse (34) est insérée sous la forme d'une mousse solide dans les espaces ouverts au cours de la réalisation du matériau (1), ou est injectée à la fin de la réalisation des première et seconde couches (2, 3).

3. Matériau structural selon la revendication 1 ou la revendication 2, dans lequel la première couche renforcée par des fibres (2), la seconde couche renforcée par des fibres (3) et/ou les composants de la structure spatiale (4), sont enroulés ou agencés au moyen d'un placement local d'une bande ou d'une fibre sur une préforme ou sur un moule (13) sous la forme d'un matériau thermoplastique ou thermodurci allongé qui comprend des fibres tel qu'une bande, une bande continue, un fil, une fibre mélangée, un câble, un ruban tissé ou non tissé.

4. Matériau structural (1) selon la revendication 3, dans lequel la matériau thermoplastique ou thermodurci allongé qui comprend des fibres est soudé, fondu, ou collé au cours de l'enroulement sur la préforme ou sur le moule (13), ou après celui-ci.

5. Matériau structural (1) selon l'une quelconque des revendications précédentes, dans lequel le matériau thermoplastique ou thermodurci renforcé par des fibres de la première couche (2), de la seconde couche (3) et/ou de la structure spatiale (4), résiste à des températures qui peuvent atteindre 150 °C, de préférence 175 °C et mieux encore 200 °C.

6. Matériau structural (1) selon l'une quelconque des revendications précédentes, dans lequel le matériau structural (1) est intégré dans un corps de tombereau ou un corps de benne qui peut être monté, par exemple, sur un camion.

7. Procédé de fabrication d'un matériau structural (1) selon la revendication 1, dans lequel le procédé comprend les étapes suivantes, à exécuter dans n'importe quel ordre approprié :
a) fournir un premier moule ou une première préforme (13) ;
b) enrouler ou agencer au moyen d'un placement d'une bande ou d'une fibre un premier matériau thermoplastique ou thermodurci allongé qui comprend des fibres, autour du premier moule ou de la première préforme (13) ;
c) fondre, coller ou souder le premier matériau thermoplastique ou thermodurci allongé au cours de l'étape b), ou après celle-ci, de façon à produire une première couche (2) ;
d) fournir une structure spatiale (4) en soudant ou en collant ensemble des poutres (5-8) et des raidisseurs (4A-D) renforcés par des fibres ;
e) agencer la structure spatiale (4) sur, dans, ou autour de, la première couche (2), et souder ou coller la structure spatiale (4) sur la première couche (2) ;
f) agencer une seconde couche (3) sur, dans, ou autour de, la structure spatiale (4), de telle sorte que la structure spatiale (4) soit agencée entre les première et seconde couches (2, 3) et que des espaces ouverts (28-32) soient définis dans la structure spatiale (4) ; et
g) remplir les espaces ouverts (28-32) qui se situent dans la structure spatiale (4) avec un matériau de mousse (34).

8. Procédé selon la revendication 7, dans lequel les espaces ouverts (28-32) de la structure spatiale (4) sont remplis avec le matériau de mousse (34) en insérant des parties de mousse solide dans les espaces ouverts (28-32) avant d'agencer et de fixer la seconde couche (3) sur la structure spatiale (4), ou en injectant un matériau de mousse qui peut durcir dans les espaces ouverts (28-32) après avoir agencé et fixé la seconde couche (3) sur la structure spatiale (4).

9. Procédé selon la revendication 7 ou la revendication 8, dans lequel l'étape f) comprend les étapes suivantes, à exécuter dans n'importe quel ordre approprié :
h) fournir un deuxième moule ou une deuxième préforme (13) ;
i) enrouler ou agencer au moyen d'un placement d'une bande ou d'une fibre un second matériau thermoplastique ou thermodurci allongé qui comprend des fibres, autour du deuxième moule ou de la deuxième préforme (13) ;
j) fondre, coller ou souder le second matériau thermoplastique allongé au cours de l'étape i), ou après celle-ci, de façon à produire la seconde couche (3) ;
k) retirer la seconde couche (3) de la deuxième préforme ou du deuxième moule (13) et l'agencer dans, sur, ou autour de, la structure spatiale (4).

10. Procédé selon la revendication 9, dans lequel le premier moule ou la première préforme et/ou le deuxième moule ou la deuxième préforme (13), fournissent au moins deux emplacements pour produire au moins deux des premières et/ou secondes couches (2, 3) dans l'étape b) et/ou i) d'enroulement et de pose d'une bande ou d'une fibre, après quoi dans une étape de découpe ultérieure, les deux premières et/ou secondes couches (2, 3) au moins peuvent être séparées l'une de l'autre et d'un éventuel matériau résiduel.

11. Procédé selon l'une quelconque des revendications 7 à 10, dans lequel des couches supplémentaires peuvent être fixées sur la première couche et/ou sur la seconde couche (2, 3), sélectionnées parmi des matériaux isolants et structuraux tels qu'un aérogel ou tout autre matériel isolant et/ou non tissé, des matériaux de PEEK, téflon, polyamide, polyimide, PETP, FBTP, POM, PU ou similaires à PU ;
dans lequel les couches supplémentaires peuvent être enduites ou formées sur la première couche et/ou sur la seconde couche (2, 3), ou elles peuvent être formées à l'avance sur un troisième moule ou sur une troisième préforme, et être fixées ensuite sur la première couche ou sur la seconde couche (2, 3) par collage, soudage ou fusion de façon à former une multicouche.

12. Procédé selon l'une quelconque des revendications 7 à 11, dans lequel la structure spatiale (4) dans l'étape d) est construite à partir de poutres (5-8) et de raidisseurs (4A-D), dans lequel une partie au moins des poutres (5-8) et des raidisseurs (4A-D) sont enroulés à partir d'un troisième matériau thermoplastique ou thermodurci allongé qui comprend des fibres, dans lequel le troisième matériau allongé est fondu, soudé ou collé pendant ou après l'enroulement, et dans lequel les poutres (5-8) et les raidisseurs (4A-D) sont soudés ou collés ensemble dans ladite structure spatiale.

13. Procédé selon l'une quelconque des revendications 7 à 12, dans lequel le matériau thermoplastique ou thermodurci renforcé par des fibres de la première couche (2), de la seconde couche (3) et/ou de la structure spatiale (4), résiste à des températures qui peuvent atteindre 150 °C, de préférence 175 °C et mieux encore 200 °C.

14. Procédé selon l'une quelconque des revendications 7 à 13, dans lequel la première couche (2) et/ou la seconde couche (3) sont formées de la même façon qu'une boîte ouverte qui présente un segment inférieur et une pluralité de parois qui s'étendent à partir dudit segment inférieur.

15. Procédé selon l'une quelconque des revendications 7 à 14, dans lequel sensiblement toutes les étapes sont exécutées selon un processus automatisé.

16. Corps de benne, comprenant une section inférieure (12), deux parois latérales (10, 11) et au moins une paroi d'extrémité (9), chacune d'elles étant réalisée à partir d'un matériau structural (1) selon l'une quelconque des revendications 1 à 6, ou à partir d'un matériau structural (1) fabriqué grâce au procédé selon l'une quelconque des revendications 7 à 15, le corps de benne comprenant en outre de préférence un bâti destiné à la fixation d'un bras de benne ou d'un cylindre de benne, lequel bâti est formé d'une pièce avec le corps de benne.
